# EUROPÄISCHE PATENTSCHRIFT

(11) **EP 3 524 382 B1**
(45) Veröffentlichungstag und Bekanntmachung des Hinweises auf die Patenterteilung: **30.09.2020**
(21) Anmeldenummer: 19154478.2
(22) Anmeldetag: 30.01.2019
(51) Int. Cl.: B23K 37/02

(54) **TRANSPORTSYSTEM**
TRANSPORT SYSTEM
SYSTÈME DE TRANSPORT

(30) Priorität: 05.02.2018 DE 102018102457; 05.03.2018 DE 102018104880
(43) Veröffentlichungstag der Anmeldung: 14.08.2019
(73) Patentinhaber: Eberspächer Exhaust Technology GmbH & Co. KG, 66539 Neunkirchen (DE)
(72) Erfinder: Puchta, Christoph, 66287 Quierschied (DE); Glieden, Achim, 66578 Schiffweiler (DE); Schneider, Daniel, 66606 St. Wendel (DE)
(74) Vertreter: Ruttensperger Lachnit Trossin Gomoll

(56) Entgegenhaltungen:
- EP-A2- 3 451 096
- DE-A1- 10 335 568
- DE-A1-102008 059 614
- GB-A- 2 260 717

## Beschreibung

Die vorliegende Erfindung betrifft ein Transportsystem für den Transport von Vorrichtungen zur Aufnahme von miteinander zu verschweißenden Komponenten z.B. für Brennkraftmaschinenabgasanlagen in eine und aus einer Schweißzelle.

Für die Durchführung von Schweißvorgängen ist es von Bedeutung, dass derartige Vorrichtungen zur Aufnahme der miteinander zu verschweißenden Komponenten schnell und mit großer Präzision in eine Schweißzelle einer Schweißanlage eingebracht und daraus wieder entfernt werden können.

Ein Transportsystem gemäß dem Oberbegriff des Anspruchs 1 ist aus der GB 2 260 717 A bekannt.

Es ist eine Aufgabe der vorliegenden Erfindung, ein Transportsystem vorzusehen, welches eine schnelle und präzise Positionierung von Vorrichtungen zur Aufnahme von miteinander zu verschweißenden Komponenten, insbesondere für Brennkraftmaschinenabgasanlagen, in einer Schweißzelle auch bei vergleichsweise großem Gewicht des zu bewegenden bzw. positionierenden Systembereichs ermöglicht.

Erfindungsgemäß wird diese Aufgabe gelöst durch ein Transportsystem für den Transport von Vorrichtungen zur Aufnahme von miteinander zu verschweißenden Komponenten, insbesondere für Brennkraftmaschinenabgasanlagen, in eine und aus einer Schweißzelle, umfassend:
- einen Transportwagen mit einem vermittels Rollen auf einem Untergrund verfahrbaren Unterwagen und einem am Unterwagen höhenverstellbar getragenen Oberwagen,
- wenigstens einen Vorrichtungsträger zur Aufnahme von miteinander zu verschweißenden Komponenten in einer für die Verschweißung vorgesehenen Positionierung bezüglich einander,
wobei am Oberwagen eine Positionier/Halte-Formation vorgesehen ist und am Vorrichtungsträger eine zum Vorgeben einer Transportpositionierung des Vorrichtungsträgers auf dem Oberwagen mit der Positionier/Halte-Formation in Eingriff stehende oder bringbare Gegen-Positionier/Halte-Formation vorgesehen ist.

Durch die Zusammenwirkung von Transportwagen und Vorrichtungsträger wird eine zuverlässige Handhabung und Positionierung auch großer Gewichte ermöglicht.

Eine definierte Relativpositionierung zwischen Transportwagen und Vorrichtungsträger kann dadurch gewährleistet werden, dass die Positionier/HalteFormation wenigstens eine, vorzugsweise wenigstens zwei erste Positionier/Halte-Einheiten und die Gegen-Positionier/Halte-Formation wenigstens eine, vorzugsweise wenigstens zwei jeweils mit einer ersten Positionier/Halte-Einheit in Eingriff stehende oder bringbare erste Gegen-Positionier/Halte-Einheiten umfasst, wobei durch jede mit einer ersten Positionier/Halte-Einheit in Eingriff stehenden ersten Gegen-Positionier/Halte-Einheit der Vorrichtungsträger bezüglich des Oberwagens in jeder Raumrichtung im Wesentlichen unbewegbar gehalten ist.

Dabei kann wenigstens eine, vorzugsweise jede erste Positionier/Halte-Einheit oder wenigstens eine, vorzugsweise jede erste Gegen-Positionier/Halte-Einheit eine Positionier/Halte-Aufnahme aufweisen, und wenigstens eine, vorzugsweise jede erste Gegen-Positionier/Halte-Einheit oder wenigstens eine, vorzugsweise jede erste Positionier/Halte-Einheit kann einen in eine Positionier/Halte-Aufnahme eingreifend positionierten oder positionierbaren Positionier/Halte-Vorsprung umfassen.

Für einen stabilen Zusammenhalt ist erfindungsgemäß vorgesehen, dass jede erste Positionier/Halte-Einheit oder/und erste Gegen-Positionier/Halte-Einheit in Zuordnung zu wenigstens dem in eine Positionier/Halte-Aufnahme eingreifend positionierten oder positionierbaren Positionier/Halte-Vorsprung ein ein Herausbewegen des Positionier/Halte-Vorsprungs aus der diesen aufnehmenden Positionier/Halte-Aufnahme verhinderndes Halteorgan umfasst. Beispielsweise kann dabei wenigstens ein, vorzugsweise jedes Halteorgan einen wenigstens eine Öffnung einer Positionier/Halte-Aufnahme und eine damit ausgerichtete Öffnung eines in die Positionier/Halte-Aufnahme eingreifend positionierten oder positionierbaren Positionier/Halte-Vorsprungs durchsetzend positionierten oder positionierbaren Haltebolzen umfassen.

Um ein Loslösen eines derartigen Halteorgans zu vermeiden, wird weiter vorgeschlagen, wenigstens einem, vorzugsweise jedem Halteorgan eine dieses gegen Herausbewegen aus den Öffnungen sichernde, vorzugsweise formschlüssig wirkende und durch Drehen des Halteorgans aktivierbare und deaktivierbare, Arretieranordnung zugeordnet ist.

Ein definierte Relativpositionierung zwischen Transportwagen und Vorrichtungsträger kann weiter dadurch unterstützt werden, dass die Positionier/Halte-Formation wenigstens eine zweite Positionier/Halte-Einheit umfasst, und dass die Gegen-Positionier/Halte-Formation wenigstens eine mit einer zweiten Positionier/HalteEinheit in Eingriff stehende oder bringbare zweite Gegen-Positionier/Halte-Einheit umfasst, wobei durch jede mit einer zweiten Positionier/Halte-Einheit in Eingriff stehende zweite Gegen-Positionier/Halte-Einheit der Vorrichtungsträger bezüglich des Oberwagens gegen Bewegung im Wesentlichen in horizontaler Richtung oder/und gegen die Bewegung in vertikaler Richtung nach unten gehalten ist.

Hierzu kann beispielsweise wenigstens eine, vorzugsweise jede zweite Positionier/Halte-Einheit eine Auflagefläche am Oberwagen umfassen, und wenigstens eine, vorzugsweise jede zweite Gegen-Positionier/Halte-Einheit kann einen auf einer Auflagefläche am Oberwagen aufliegend positionierten oder positionierbaren Auflieger umfassen.

Zum Bewegen eines Vorrichtungsträgers in die gewünschte Position kann am Transportwagen, vorzugsweise am Unterwagen, wenigstens ein Handgriff zum Bewegen des Transportwagens vorgesehen sein. Ferner kann der Oberwagen bezüglich des Unterwagens durch einen Scherenhubmechanismus höhenverstellbar getragen sein, oder/und am Transportwagen, vorzugsweise am Unterwagen, kann eine Hubmaschinen-Eingriffsformation vorgesehen sein.

Für die Zusammenwirkung mit einer derartigen z.B. als Gabelstapler oder Hubwagen ausgebildeten Hubmaschine kann die Hubmaschinen-Eingriffsformation wenigstens zwei Hubwerkzeug-Eingriffsöffnungen, vorzugsweise zueinander im Wesentlichen parallel sich erstreckende Eingriffsschächte, umfassen.

Um auch bei vergleichsweise großen zu bewegenden Lasten eine präzise Verstellung des Oberwagens bezüglich des Unterwagens zu ermöglichen, wird vorgeschlagen, dass dem Scherenhubmechanismus ein mit Druckfluid, vorzugsweise hydraulisch, betätigter Stellantrieb zugeordnet ist, oder/und dass am Transportwagen, vorzugsweise am Unterwagen, eine Anschluss/Betätigungs-Einheit zum Anschluss eines dem Scherenhubmechanismus zugeordneten Stellantriebs an eine Energiequelle und zur Betätigung des Stellantriebs vorgesehen ist.

Um einen vermittels des Transportwagens in eine Schweißzelle transportierten Vorrichtungsträger in der Schweißzelle zur Durchführung eines Schweißvorgangs zu halten, wird vorgeschlagen, dass an wenigstens einem, vorzugsweise jedem Vorrichtungsträger eine zum lösbaren Festlegen des Vorrichtungsträgers an einer an einer Schweißzelle vorgesehenen ersten Kupplungseinheit mit der ersten Kupplungseinheit in Eingriff bringbare zweite Kupplungseinheit vorgesehen ist.

Dabei kann eine Kupplungseinheit von erster Kupplungseinheit und zweiter Kupplungseinheit eine Schiebe-Eingriffsaussparung aufweisen, und die andere Kupplungseinheit von erster Kupplungseinheit und zweiter Kupplungseinheit kann einen in einer Schieberichtung in die Schiebe-Eingriffsaussparung einschiebbaren Schiebe-Eingriffskörper aufweisen.

Zum Sichern einer stabilen Position auch während eines Schweißvorgangs kann eine zwischen einem Freigabezustand und einem Formschluss-Positionierzustand verstellbare Formschluss-Positionieranordnung vorgesehen sein, wobei bei in die Schiebe-Eingriffsaussparung eingreifend positioniertem Schiebe-Eingriffskörper die Formschluss-Positionieranordnung im Formschluss-Positionierzustand den Schiebe-Eingriffskörper in einer Betriebsstellung bezüglich der Schiebe-Eingriffsaussparung positioniert gegen Verschiebung in der Schiebe-Eingriffsaussparung hält.

Die Schiebe-Eingriffsaussparung kann eine Hinterschneidung bilden, und der in die Schiebe-Eingriffsaussparung eingeschobene Schiebe-Eingriffskörper kann die Hinterschneidung hintergreifen, wobei vorzugsweise die Schiebe-Eingriffsaussparung ein Schwalbenschwanz-Innenprofil aufweist und der Schiebe-Eingriffskörper ein Schwalbenschwanz-Außenprofil aufweist.

Die vorliegende Erfindung wird nachfolgend mit Bezug auf die beiliegenden Figuren detailliert beschrieben. Es zeigt:
- Fig. 1: die wesentlichen Systembereiche einer Schweißanlage zum Verschweißen von Komponenten für Brennkraftmaschinenabgasanlagen;
- Fig. 2: in perspektivischer Ansicht eine an einer Trägereinheit einer Schweißzelle festzulegende erste Kupplungseinheit einer Schnellwechselkupplung;
- Fig. 3: in perspektivischer Ansicht eine an einem Vorrichtungsträger festzulegenden zweiten Kupplungseinheit der Schnellwechselkupplung mit einer zugeordnete Klemm-Positionieranordnung;
- Fig. 4: eine der Fig. 3 entsprechende Ansicht der zweiten Kupplungseinheit mit der daran angreifenden Klemm-Positionieranordnung.
- Fig. 5: in perspektivischer Darstellung ein Transportsystem mit einem Transportwagen und einem auf einem Oberwagen des Transportwagens getragenen Vorrichtungsträger;
- Fig. 6: eine andere perspektivische Ansicht des Transportsystems der Fig. 5;

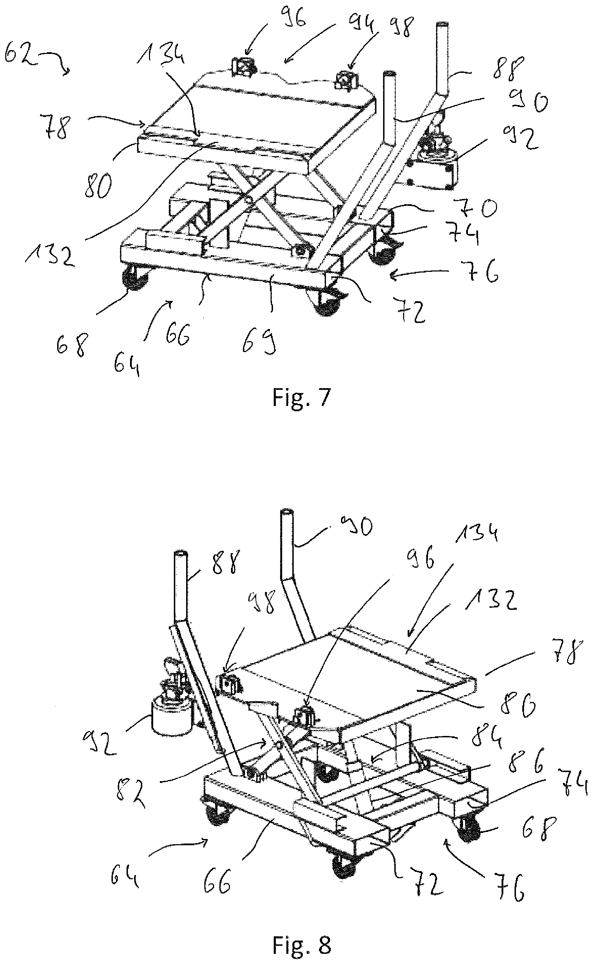

- Fig. 7: den Transportwagen des Transportsystems der Fig. 5 in perspektivischer Ansicht;
- Fig. 8: den in Fig. 7 dargestellten Transportwagen, betrachtet in anderer Richtung;
- Fig. 9: eine mit einer Gegen-Positionier/Halte-Einheit zusammen wirkende Positionier/Halte-Einheit.

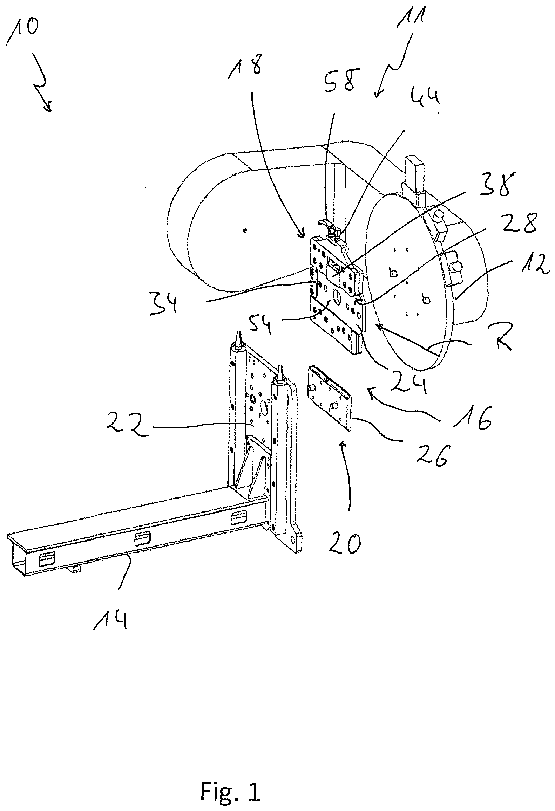

In Fig. 1 sind die für die Positionierung von zu verschweißenden Komponenten beispielsweise für Brennkraftmaschinenabgasanlagen wesentlichen Systembereiche einer allgemein mit 10 bezeichneten Schweißanlage zu erkennen. Diese Systembereiche umfassen eine in einer Schweißzelle 11 angeordnete plattenartige Trägereinheit 12 sowie einen an der Trägereinheit 12 zur Durchführung von Schweißvorgängen festzulegenden Vorrichtungsträger 14. An dem Vorrichtungsträger 14 können über in der Fig. 1 nicht dargestellte Vorrichtungen, wie z.B. klemmend wirkende Positionierelemente, die miteinander zu verschweißenden Komponenten in einer für die Verschweißung vorgesehenen Positionierung festgelegt werden. Zur Anpassung an verschiedene Typen der miteinander zu verschweißenden Komponenten, z.B. für die Herstellung verschiedener Arten von Abgasanlagen, sind die Vorrichtungen variabel am Vorrichtungsträger 14 anbringbar bzw. können verschiedene Vorrichtungsträger 14 mit derartigen Vorrichten verschieden konfiguriert und bei Bedarf in eine Schweißzelle eingebracht werden.

Vermittels einer allgemein mit 16 bezeichneten Schnellwechselkupplung kann der Vorrichtungsträger 14 an der plattenartigen Trägereinheit 12 festgelegt werden, so dass die an dem Vorrichtungsträger 14 getragenen, zu verschweißenden Komponenten in der Schweißzelle 11 in geeigneter Positionierung gehalten bzw. angeordnet werden können.

Die Schnellwechselkupplung 16 umfasst eine an der plattenartigen Trägereinheit 12 beispielsweise durch Verschraubung festzulegende erste Kupplungseinheit 18 und eine an dem Vorrichtungsträger 14 beispielsweise ebenfalls durch Verschraubung festzulegende zweite Kupplungseinheit 20. Diese kann an einer am Vorrichtungsträger 14 vorgesehenen Trägerplatte 22 festgelegt werden.

Die Schnellwechselkupplung 16 bietet die Möglichkeit, durch Koppeln der beiden Kupplungseinheiten 18, 20 derselben den Vorrichtungsträger 14 schnell und lösbar an der Trägereinheit 12 anzubringen. Um dies zu ermöglichen, ist an der ersten Kupplungseinheit 18 eine Schiebe-Eingriffsaussparung 24 vorgesehen. Die zweite Kupplungseinheit 20 umfasst bzw. ist ausgebildet mit einem Schiebe-Eingriffskörper 26, der mit seiner plattenartigen Struktur in die Schiebe-Eingriffsaussparung 24 eingeschoben werden kann. Um durch das Einschieben einen festen, formschlüssigen Eingriff zu erzeugen, bildet die Schiebe-Eingriffsaussparung in ihren in einer Schieberichtung R verlaufenden Seitenrandbereichen eine beispielsweise nach Form eines Schwalbenschwanz-Innenprofils 30 ausgebildete Hinterschneidung 28. In entsprechender Weise ist der Schiebe-Eingriffskörper 26 als die Hinterschneidung 28 hintergreifender Körper, beispielsweise mit Schwalbenschwanz-Außenprofil 32 aufgebaut.

Zum Herstellen des Schiebeeingriffs wird der am Vorrichtungsträger 14 festgelegte Schiebe-Eingriffskörper 26 der zweiten Kupplungseinheit 20 beispielsweise im Wesentlichen in horizontaler Richtung in der Schieberichtung R in die Schiebe-Eingriffsaussparung 24 eingeschoben. Die Schiebe-Eingriffsaussparung 24 ist vorzugsweise durch einen Einschubanschlag 34 in der Schieberichtung R begrenzt, so dass durch den Einschubanschlag 34 eine maximale Einschiebeposition des Schiebe-Eingriffskörpers 26 in die Schiebe-Eingriffsaussparung 24 vorgegeben werden kann. Eine Bewegung über diese maximale Einschiebeposition hinaus ist nicht möglich.

Um ein Herausbewegen des Schiebe-Eingriffskörpers 26 der zweiten Kupplungseinheit 20 aus der Schiebe-Eingriffsaussparung zu unterbinden, ist an der ersten Kupplungseinheit 18 eine Klemm-Positionieranordnung 36 vorgesehen. Diese umfasst ein an der ersten Kupplungseinheit 18 im Wesentlichen quer zur Schieberichtung R verschiebbares Klemm-Positionierorgan 38 und einen dem Klemm-Positionierorgan 38 zugeordneten Stellantrieb 40. Der Stellantrieb 40 wiederum ist vorzugsweise mit einer beispielsweise in einem an der ersten Kupplungseinheit 18 vorgesehenen Gehäuse 42 aufgenommenen Stellspindel 44 bereitgestellt, die vorzugsweise selbsthemmend ausgebildet ist und deren Betätigung zu einer Verschiebung des Klemm-Positionierorgans quer zur Schieberichtung R führt.

Bei in die Schiebe-Eingriffsaussparung 24 eingeführtem Schiebe-Eingriffskörper 26 kann durch Bewegen des Klemm-Positionierorgans 38 in Richtung auf den Schiebe-Eingriffskörper 26 zu das Klemm-Positionierorgan 38 an einem seitlichen Randbereich des Schiebe-Eingriffskörpers 26 in Anlage gebracht werden und mit Druck gegen dieses gepresst werden. Dabei kann die Kontur des Klemm-Positionierorgans 38 der Kontur der Schiebe-Eingriffsaussparung 24 zum Bereitstellen der Hinterschneidung, also des Schwalbenschwanz-Innenprofils 30 angepasst sein, so dass das Klemm-Positionierorgan 38 den komplementär geformten und mit Schwalbenschwanz-Außenprofil 32 geformten Randbereich des Schiebe-Eingriffskörpers 26 übergreifen kann.

Durch das Klemm-Positionierorgan 38 bzw. die Klemm-Positionieranordnung 36 wird bei in die Schiebe-Eingriffsaussparung 24 eingreifend positioniertem und beispielsweise am Einschubanschlag 34 anliegendem Schiebe-Eingriffskörper 26 eine auch ein geringfügiges Bewegungsspiel zwischen diesem und der ersten Kupplungseinheit 18 aufhebende Klemmwirkung erzeugt.

Um insbesondere in der Schieberichtung R eine definierte Positionierung des Schiebe-Eingriffskörpers 26 bei Erzeugung der Klemmwirkung und damit Festlegung des Schiebe-Eingriffskörpers 26 bezüglich der Schiebe-Eingriffsaussparung 24 erreichen zu können, ist ferner eine allgemein mit 46 bezeichnete Formschluss-Positionieranordnung vorgesehen. Diese umfasst ein zapfenartiges Formschluss-Positionierorgan 48, das beispielsweise am Klemm-Positionierorgan 38 vorgesehen oder durch dieses bereitgestellt sein kann. In Zuordnung zu dem Formschluss-Positionierorgan 48 ist am Schiebe-Eingriffskörper 26 eine Formschluss-Positionieraussparung 50 derart vorgesehen, dass diese im Wesentlichen orthogonal zur Schieberichtung R offen ist. Das Formschluss-Positionierorgan 48 und die Formschluss-Positionieraussparung 50 sind derart aufeinander abgestimmt, dass bei in die Formschluss-Positionieraussparung 50 eingreifendem Formschluss-Positionierorgan 48 im Wesentlichen kein Bewegungsspiel zwischen dem Schiebe-Eingriffskörper 26 und dem Formschluss-Positionierorgan 38 und somit im Wesentlichen auch der das Formschluss-Positionierorgan 38 aufnehmenden ersten Kupplungseinheit 18 vorhanden ist.

Um bei der Festlegung des Schiebe-Eingriffskörpers 26 in der Schiebe-Eingriffsaussparung 24 eine Überbestimmung der Positionsvorgabe durch den Einschubanschlag 34 einerseits und das Formschluss-Positionierorgan 48 andererseits zu vermeiden, entspricht die bei Wirksamwerden des Einschubanschlags 34 erreichte maximale Einschiebeposition nicht der für einen Schweißvorgang vorzusehenden Betriebsstellung des Schiebe-Eingriffskörpers 26 in der Schiebe-Eingriffsaussparung 24. Vielmehr ist die maximale Einschiebeposition eine Position, in welche der Schiebe-Eingriffsköper 26 durch Bewegen über die Betriebsposition hinaus gebracht wird.

Zum Einschieben der zweiten Kupplungseinheit 20, also des plattenartigen Schiebe-Eingriffskörpers 26, in die erste Kupplungseinheit 18, also die Schiebe-Eingriffsaussparung 24, ist zunächst die Klemm-Positionieranordnung 36 und damit auch die Formschluss-Positionieranordnung 46 in einem Freigabezustand. In diesem Zustand kann der Schiebe-Eingriffskörper 26 ungehindert eingeschoben werden, bis er am Einschubanschlag 34 in Anlage kommt. Darauffolgend wird durch manuelle oder beispielsweise auch motorische Einwirkung auf den Stellantrieb 40, also insbesondere die Stellspindel 44, das Klemm-Positionierorgan 38 und mit diesem das Formschluss-Positionierorgan 48 in Richtung auf den Schiebe-Eingriffskörper 26 zu bewegt. Noch bevor das Klemm-Positionierorgan 38 seine Klemmwirkung entfalten kann, tritt das Formschluss-Positionierorgan 48 in die Formschluss-Positionieraussparung 50 ein. Da diese nicht in einer der Betriebsstellung entsprechenden Relativpositionierung zueinander sind, ist im dargestellten Beispiel am Formschluss-Positionierorgan 48 eine Positionierschräge 52 vorgesehen. Durch die keilartige Wirkung der Positionierschräge 52 wird bei Bewegung des Formschluss-Positionierorgans 48 auf den Schiebe-Eingriffskörper 26 zu und dabei in die Formschluss-Positionieraussparung 50 eintretendem Formschluss-Positionierorgan 48 auf den Schiebe-Eingriffskörper 26 eine diesen entgegengesetzt zur Schieberichtung R beaufschlagende Kraft entfaltet, wodurch der Schiebe-Eingriffskörper 26 in Richtung zur Betriebsposition verschoben wird. In diesem Zustand sind das Formschluss-Positionierorgan 48 und die Formschluss-Positionieraussparung 50 bezüglich einander korrekt ausgerichtet, und das Formschluss-Positionierorgan 48 kann zur definierten Vorgabe des Schiebe-Eingriffskörpers 26 weiter in die Formschluss-Positionieraussparung 50 eintreten, so dass ein Formschluss-Positionierzustand erreicht ist, in welchem eine Bewegung des Schiebe-Eingriffskörpers 26 in der Schieberichtung R oder entgegengesetzt zur Schieberichtung R nicht mehr möglich ist.

Bei weiter fortgesetzter Bewegung des das Formschluss-Positionierorgan 48 auch tragenden Klemm-Positionierorgans 38 in Richtung auf den Schiebe-Eingriffskörper 26 zu kommt das Klemm-Positionierorgan 38 zur Anlage am seitlichen Randberiech des Schiebe-Eingriffskörpers 26 und erzeugt somit in einem dann herbeigeführten Klemm-Positionierzustand eine Klemmwirkung, welche jedwede Bewegung des Schiebe-Eingriffskörpers 26 bezüglich der ersten Kupplungseinheit 18 unterbindet. Dies wird insbesondere dadurch unterstützt, dass durch die seitliche Beaufschlagung des Schiebe-Eingriffskörpers 26 durch das Klemm-Positionierorgan 38 die miteinander in Eingriff stehenden Schwalbenschwanz-Außen- bzw. Innenprofile zusätzlich eine den Schiebe-Eingriffskörper 26 im Wesentlichen senkrecht zur Schieberichtung R in Richtung auf einen Boden 54 der Schiebe-Eingriffsaussparung 24 zu pressende Kraft erzeugt wird.

Um bei Durchführung eines Schweißvorgangs zu verhindern, dass dabei möglicherweise auftretende Vibrationen zu einem Loslösen des Stellantriebs 40 führen, kann diesem zusätzlich eine allgemein mit 56 bezeichnete Blockieranordnung zugeordnet sein. Diese kann, beispielsweise untergebracht im Gehäuse 42, ein durch einen Klemmhebel 58 aktivierbares Klemmelement umfassen, welches in dem im Gehäuse 42 geführten Bereich des Stellantriebs 40 bzw. der Stellspindel 44 gegen diese presst und somit durch Reibkraftschluss oder/und durch Formschluss ein Lösen des an sich bereits selbsthemmend ausgebildeten Stellantriebs 40 verhindert.

Soll ein an der Trägereinheit 12 getragener Vorrichtungsträger 14 nach Durchführung eines Schweißvorgangs aus der Schweißzelle einer Schweißanlage 10 entfernt werden, kann zunächst die Blockieranordnung 56 deaktiviert werden. Daraufhin wird durch Einwirken auf die Stellspindel 44 die Klemm-Positionieranordnung 36 und mit dieser die Formschluss-Positionieranordnung 46 durch seitliches Herausziehen des Klemm-Positionierorgans 38 und des Formschluss-Positionierorgans 48 in den Freigabezustand gebracht, in welchem der Schiebe-Eingriffskörper 26 zusammen mit dem diesen tragenden Vorrichtungsträger 14 seitlich aus der Schiebe-Eingriffsaussparung 24 herausbewegt werden kann, um für einen nachfolgend durchzuführenden Schweißvorgang beispielsweise einen anderen, bereits mit zu verschweißenden Komponenten bestückten Vorrichtungsträger mit dem daran getragenen Schiebe-Eingriffskörper in Eingriff mit der ersten Kupplungseinheit 18 zu bringen.

Es ist darauf hinzuweisen, dass der im Wesentlichen die zweite Kupplungseinheit 20 bereitstellende, plattenartige Schiebe-Eingriffskörper 26 aus einem einzigen vorzugsweise mit Metallmaterial aufgebauten, plattenartigen Bauteil bestehen kann. Die komplexer gestaltete zweite Kupplungseinheit 18 kann mit einer an der Trägereinheit 12 festzulegenden, und auch den Boden 54 der Schiebe-Eingriffsaussparung 24 bereitstellenden Basisplatte vorzugsweise aus Metallmaterial aufgebaut sein, an welcher das Schwalbenschwanz-Innenprofil 30 bereitstellende Seitenplatten und eine den Einschubanschlag 34 bereitstellende Endplatte, vorzugsweise jeweils aus Metallmaterial aufgebaut, beispielsweise durch Verschraubung festgelegt sein können. Im Bereich einer der Seitenplatten kann das die Stellspindel 44 und die Blockieranordnung 56 aufnehmende Gehäuse 42 untergebracht sein. Diese Seitenplatte weist weiterhin eine Aussparung auf, in welcher das quer zur Schieberichtung R verschiebbare Klemm-Positionierorgan 38 aufgenommen bzw. geführt ist.

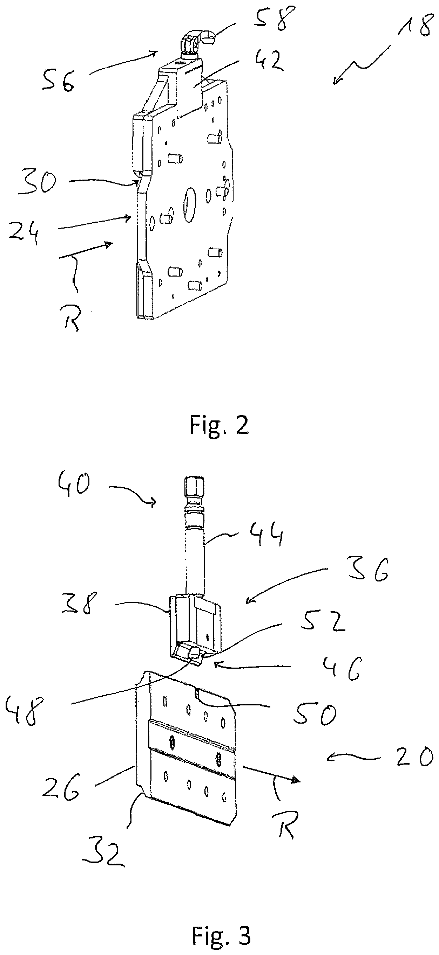

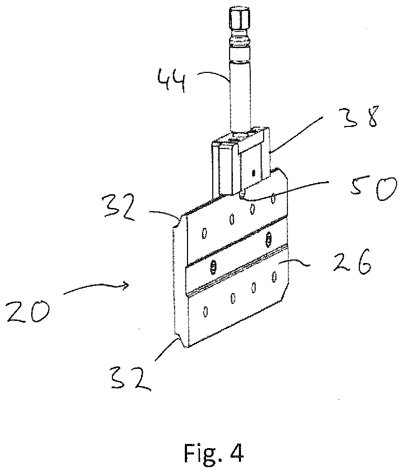

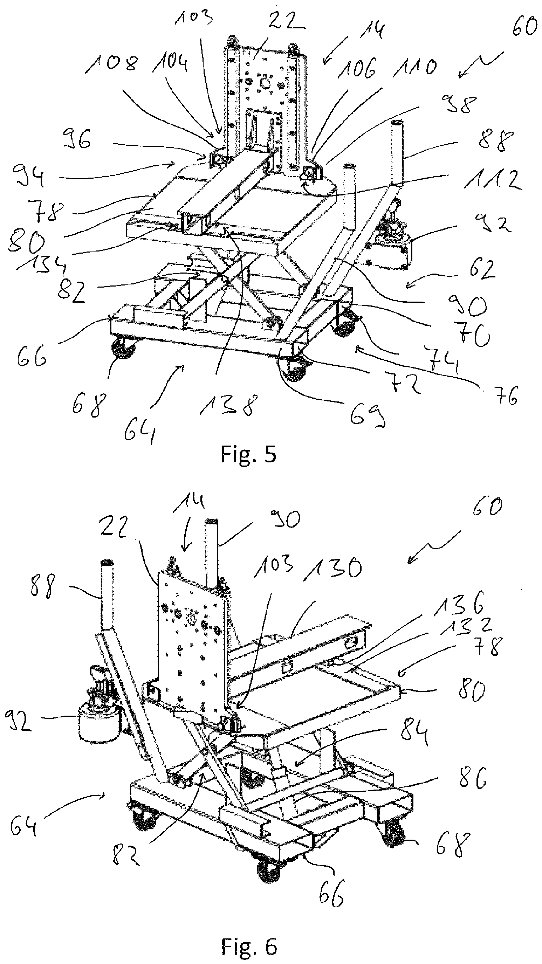

Die Fig. 5 und 6 zeigen ein allgemein mit 60 bezeichnetes Transportsystem, welches einerseits den vorangehend mit Bezug auf die Fig. 1 bereits erläuterten Vorrichtungsträger 14 und andererseits einen im Transport- bzw. Lagerzustand den Vorrichtungsträger 14 aufnehmenden Transportwagen 62 umfasst. Mit dem Transportwagen 62 kann der mit zu verschweißenden Komponenten bestückte Vorrichtungsträger 14 unter Einsatz der vorangehend mit Bezug auf die Fig. 1 bis 4 detailliert beschriebenen Schnellwechselkupplung 16 in einer Schweißzelle 11 einer Schweißanlage 10 positioniert werden bzw. aus dieser Schweißzelle entfernt werden.

Der Transportwagen 62 umfasst einen Unterwagen 64, der auf beispielsweise vier an einem Rahmen 66 vorgesehenen Rollen 68 verfahrbar ist. Es sei darauf hingewiesen, dass im Sinne der vorliegenden Erfindung eine Rolle jedwede zum Verfahren des Transportwagens 62 geeignete Formation, wie z. B. Walze, Rad oder dergleichen umfasst. Der Rahmen 66 des Unterwagens 64 ist mit zwei langgestreckten und miteinander fest verbundenen Hohlprofilteilen 69, 70 aufgebaut. Diese bilden jeweilige Eingriffsschächte 72, 74 einer allgemein mit 76 bezeichneten Hubmaschinen-Eingriffsformation. Eine Hubmaschine, beispielsweise ein Gabelstapler oder ein Hubwagen oder dergleichen, kann mit entsprechenden gabelartig geformten Hubzinken in die Eingriffsschächte 72, 74 eingreifend positioniert werden und so den gesamten Transportwagen 62 bzw. das gesamte Transportsystem 60 anheben und beispielsweise in einem Lagerregal oder dergleichen positionieren oder von einer derartigen Lagerpositionierung entnehmen.

Auf dem Unterwagen 64 ist ein allgemein mit 78 bezeichneter Oberwagen in Höhenrichtung verstellbar getragen. Der Oberwagen 78 umfasst einen plattenartigen Träger 80, der vermittels eines Scherenhubmechanismus 82 in Höhenrichtung verstellbar ist. Dem Scherenhubmechanismus 82 ist ein Stellantrieb 84 zugeordnet. Dieser umfasst im dargestellten Beispiel eine Kolben/Zylinder-Einheit 86, die mit Druckfluid, insbesondere hydraulisch, zu betätigen ist, um den Oberwagen 78 in Höhenrichtung auf den Unterwagen 64 zu verstellen.

Am Unterwagen 64 sind zwei Handgriffe 88, 90 vorgesehen, welche es einer Bedienperson ermöglichen, in ergonomisch vorteilhafter Haltung das gesamte Transportsystem 60 zu bewegen. Am Handgriff 88 ist eine allgemein mit 92 bezeichnete Anschluss/Betätigungs-Einheit vorgesehen. Über diese kann der Stellantrieb 84 an eine externe Energiequelle, also ein Druckfluidversorgungssystem, angeschlossen werden und kann bei angeschlossenem Druckfluidversorgungssystem die Kolben/Zylinder-Einheit 86 durch Zuleiten bzw. Ableiten von Druckfluid verstellt werden, um auf diese Art und Weise die Höhenposition des plattenartigen Trägers 80 des Oberwagens 78 in gewünschter Weise einzustellen.

Zur Festlegung des Vorrichtungsträgers 14 auf dem Oberwagen 78 ist eine allgemein mit 94 bezeichnete Positionier/Halte-Formation vorgesehen. Diese sorgt dafür, dass der Vorrichtungsträger 14 stabil und in definierter Position auf dem Oberwagen 78 gehalten werden kann, gestattet jedoch auch ein Loslösen des Vorrichtungsträgers 14 vom Oberwagen 78, beispielsweise dann, wenn die beiden Kupplungseinheiten 18, 20 der Schnellwechselkupplung 16 in Eingriff miteinander gebracht sind und somit der Vorrichtungsträger 14 mit den darauf getragenen Komponenten stabil an der Trägereinheit 12 einer Schweißzelle gehalten ist und für die Durchführung eines Schweißvorgangs der Transportwagen 62 zu entfernen ist.

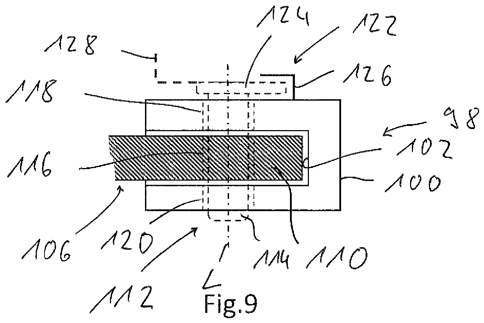

Die Positionier/Halte-Formation 94 umfasst zwei erste Positionier/Halte-Einheiten 96, 98. Vermittels der beiden ersten Positionier/Halte-Einheiten 96, 98 ist der Vorrichtungsträger 14 derart an dem Oberwagen 78 des Transportwagens 62 gehalten, dass er in jeder Raumrichtung im Wesentlichen unbewegbar ist. Das heißt, durch die Haltewirkung der ersten Positionier/Halte-Einheiten 96, 98 kann der Vorrichtungsträger 14 weder in vertikaler Richtung nach oben oder unten, noch in Horizontaler Richtung bewegt werden. Jede der in Fig. 9 anhand der ersten Positionier/Halte-Einheit 98 detaillierter dargestellten ersten Positionier/Halte-Einheiten 96, 98 umfasst am Oberwagen 78 eine im Wesentlichen U-förmig gestaltete Positionier/Halte-Aufnahme 100. Die beiden Positionier/Halte-Aufnahmen 100 der ersten Positionier/Halte-Einheiten 96, 98 sind an dem plattenartigen Träger 80 des Oberwagens 78 so orientiert festgelegt, dass eine in diesen gebildete Aufnahmeaussparung 102 nach oben und jeweils in Richtung auf die andere Positionier/Halte-Aufnahme 100 zu offen ist.

Am Vorrichtungsträger 14 bzw. der Trägerplatte 22 desselben sind in Zuordnung zu den beiden Positionier/Halte-Einheiten 96, 98 bzw. den Positionier/Halte-Aufnahmen 100 derselben jeweilige Gegen-Positionier/Halte-Einheiten 104, 106 einer zweiten Gegen-Positionier/Halte-Formation 103 vorgesehen. Diese umfassen an der Trägerplatte 22 seitlich vorstehende Positionier/Halte-Vorsprünge 108, 110, welche zur Herstellung der Haltewechselwirkung durch Absenken des Vorrichtungsträgers 14 auf den Oberwagen 78 zu von oben in die Aufnahmeaussparungen 102 der ersten Positionier/Halte-Einheiten 96, 98 bzw. der Positionier/Halte-Aufnahmen 100 derselben eingeführt werden können und dann darin im Wesentlichen ohne Bewegungsspiel aufgenommen sind. Bei vollständig abgesenktem Vorrichtungsträger 14 liegt dieser beispielsweise im Bereich der Trägerplatte 22 dann in vertikaler Richtung auf dem plattenartigen Träger 80 des Oberwagens 78 auf und ist somit bereits in vertikaler Richtung nach unten und in jeder Horizontalrichtung im Wesentlichen gegen Bewegung bezüglich des Oberwagens 78 gehalten.

Um einen sicheren Zusammenhalt zu gewährleisten, ist in Zuordnung zu jeder ersten Positionier/Halte-Einheit 96, 98 bzw. in dieser aufgenommenen ersten Gegen-Positionier/Halte-Einheit 104, 106 ein Halteorgan 112 vorgesehen. Jedes Halteorgan 112 umfasst einen Haltebolzen 114, der eine in einem jeweiligen Positionier/HalteVorsprung 108, 110 ausgebildete Öffnung 116 sowie entsprechende Öffnungen 118, 120 in der den Positionier/Halte-Vorsprung 108, 110 umgreifenden Positionier/Halte-Aufnahme 100 durchsetzt. Durch den Haltebolzen 114 wird somit auch in Richtung vertikal nach oben ein Formschluss generiert, welcher ein Abheben des Vorrichtungsträgers 14 vom Oberwagen 78 verhindert.

Um ein Loslösen der in die Öffnungen 116, 118, 120 eingreifenden Haltebolzen 114 von den jeweiligen ersten Positionier/Halte-Einheiten 96, 98 zu verhindern, ist einem jeweiligen Positionierorgan 112 eine allgemein mit 122 bezeichnete Arretiereinheit zugeordnet. Diese umfasst an einem jeweiligen Haltebolzen 114 eine bezüglich einer jeweiligen Längsachse L des Haltebolzens 114 nicht rotationssymmetrische, beispielsweise scheibenartige Eingriffsformation 124, die, wie in Fig. 9 veranschaulicht, aufgrund ihrer nicht rotationssymmetrischen Ausgestaltung in verschiedenen Umfangsbereichen radial bezüglich einer Längsachse des Haltebolzens 114 unterschiedlich weit hervorsteht. In Zuordnung zu dieser Eingriffsformation 124 ist an einer jeweiligen Positionier/Halte-Aufnahme 100 eine eine Hinterschneidung bereitstellende Gegen-Eingriffsformation 126 vorgesehen. Durch Verdrehen des Halteorgans 112 vermittels eines Betätigungshebels 128 um die Längsachse L des Haltebolzens 114 kann die Eingriffsformation 124 in und außer Eingriff mit der Gegen-Eingriffsformation 126 gebracht werden, so dass bei in Fig. 9 dargestelltem hergestelltem Eingriff ein jeweiliges Halteorgan 112 nicht in Richtung der Längsachse L des Haltebolzens 114 verschoben werden kann und bei gelöstem Eingriff der Haltebolzen 114 aus den diesen aufnehmenden Öffnungen 116, 118, 120 entfernt oder in diese eingeschoben werden kann.

Der Vorrichtungsträger 114 umfasst neben der einerseits die ersten Gegen-Positionier/Halte-Einheiten 104, 106 und andererseits die zweite Kupplungseinheit 20 aufnehmenden Trägerplatte 22 einen an der Trägerplatte 22 festgelegten und von dieser sich weg erstreckenden, beispielsweise balkenartigen Träger 130. Auf dem balkenartigen Träger 130 können die miteinander zu verschweißenden Komponenten unter Einsatz entsprechender Halte- bzw. Spannwerkzeuge positioniert werden. An dem von der Anbindung an die Trägerplatte 22 entfernten Endbereich des balkenartigen Trägers 130 umfasst die Positionier/Halte-Formation 94 eine durch eine Auflagefläche 132 auf dem plattenartigen Träger 80 des Oberwagens 78 bereitgestellte zweite Positionier/Halte-Einheit 134. Am balkenartigen Träger 130 des Vorrichtungsträgers 14 ist ein beispielsweise schienenartiger Auflieger 136 vorgesehen, der im Wesentlichen eine zweite Gegen-Positionier/Halte-Einheit 138 bereitstellt. Bei auf dem Oberwagen 78 positioniertem Vorrichtungsträger 14 liegt dieser somit auch in seinem von der Trägerplatte 22 entfernten Endbereich stabil auf dem Oberwagen 78 auf und ist somit durch die Zusammenwirkung der zweiten Positionier/Halte-Einheit 134 mit der zweiten Gegen-Positionier/Halte-Einheit 138 gegen Bewegung in Richtung nach vertikal unten gehalten. Aufgrund der bestehenden Reibwechselwirkung kann auch eine in horizontaler Richtung wirkende Haltewechselwirkung erzielt werden. Um dies zu verstärken, können an der Auflagefläche 132 einerseits und dem Auflieger 136 andererseits jeweilige Vorsprünge bzw. Aussparungen vorgesehen sein, die bei Absenken des Vorrichtungsträgers 14 auf dem Oberwagen 78 zu miteinander in Eingriff gebracht werden und somit einen in Horizontalrichtung wirkenden Formschluss erzeugen können.

## Patentansprüche

1. Transportsystem für den Transport von Vorrichtungen zur Aufnahme von miteinander zu verschweißenden Komponenten, insbesondere für Brennkraftmaschinenabgasanlagen, in eine und aus einer Schweißzelle, umfassend:
- einen Transportwagen (62) mit einem vermittels Rollen (68) auf einem Untergrund verfahrbaren Unterwagen (64) und einem am Unterwagen (64) höhenverstellbar getragenen Oberwagen (78),
- wenigstens einen Vorrichtungsträger (14) zur Aufnahme von miteinander zu verschweißenden Komponenten in einer für die Verschweißung vorgesehenen Positionierung bezüglich einander,
wobei am Oberwagen (78) eine Positionier/Halte-Formation (94) vorgesehen ist und am Vorrichtungsträger (14) eine zum Vorgeben einer Transportpositionierung des Vorrichtungsträgers (14) auf dem Oberwagen (78) mit der Positionier/Halte-Formation (94) in Eingriff stehende oder bringbare Gegen-Positionier/Halte-Formation (103) vorgesehen ist,
**dadurch gekennzeichnet, dass** die Positionier/Halte-Formation (94) wenigstens eine erste Positionier/Halte-Einheiten (96, 98) und die Gegen-Positionier/Halte-Formation (103) wenigstens eine jeweils mit einer ersten Positionier/Halte-Einheit (96, 98) in Eingriff stehende oder bringbare erste Gegen-Positionier/Halte-Einheiten (104, 106) umfasst, wobei durch jede mit einer ersten Positionier/Halte-Einheit (96, 98) in Eingriff stehenden ersten Gegen-Positionier/Halte-Einheit (104, 106) der Vorrichtungsträger (14) bezüglich des Oberwagens (78) in jeder Raumrichtung im Wesentlichen unbewegbar gehalten ist.

2. Transportsystem nach Anspruch 1, **dadurch gekennzeichnet, dass** die Positionier/Halte-Formation (94) wenigstens zwei erste Positionier/Halte-Einheiten (96, 98) und die Gegen-Positionier/Halte-Formation (103) wenigstens zwei jeweils mit einer ersten Positionier/Halte-Einheit (96, 98) in Eingriff stehende oder bringbare erste Gegen-Positionier/Halte-Einheiten (104, 106) umfasst.

3. Transportsystem nach Anspruch 1 oder 2, **dadurch gekennzeichnet, dass** wenigstens eine, vorzugsweise jede erste Positionier/Halte-Einheit (96, 98) oder wenigstens eine, vorzugsweise jede erste Gegen-Positionier/HalteEinheit eine Positionier/Halte-Aufnahme (100) aufweist, und dass wenigstens eine, vorzugsweise jede erste Gegen-Positionier/Halte-Einheit (104, 106) oder wenigstens eine, vorzugsweise jede erste Positionier/Halte-Einheit (100) einen in eine Positionier/Halte-Aufnahme (100) eingreifend positionierten oder positionierbaren Positionier/Halte-Vorsprung (108, 110) umfasst.

4. Transportsystem nach Anspruch 3, **dadurch gekennzeichnet, dass** jede erste Positionier/Halte-Einheit (96, 98) oder/und erste Gegen-Positionier/HalteEinheit (104, 106) in Zuordnung zu wenigstens dem in eine Positionier/Halte-Aufnahme (100) eingreifend positionierten oder positionierbaren Positionier/Halte-Vorsprung (108, 110) ein ein Herausbewegen des Positionier/Halte-Vorsprungs (108, 110) aus der diesen aufnehmenden Positionier/Halte-Aufnahme (100) verhinderndes Halteorgan (112) umfasst.

5. Transportsystem nach Anspruch 4, **dadurch gekennzeichnet, dass** wenigstens ein, vorzugsweise jedes Halteorgan (112) einen wenigstens eine Öffnung (118, 120) einer Positionier/Halte-Aufnahme (100) und eine damit ausgerichtete Öffnung (106) eines in die Positionier/Halte-Aufnahme (100) eingreifend positionierten oder positionierbaren Positionier/Halte-Vorsprungs (110) durchsetzend positionierten oder positionierbaren Haltebolzen (114) umfasst, oder/und dass wenigstens einem, vorzugsweise jedem Halteorgan (112) eine dieses gegen Herausbewegen aus Öffnungen (116, 118, 120) sichernde, vorzugsweise formschlüssig wirkende und durch Drehen des Halteorgans (112) aktivierbare und deaktivierbare, Arretieranordnung (122) zugeordnet ist.

6. Transportsystem nach einem der vorangehenden Ansprüche, **dadurch gekennzeichnet, dass** die Positionier/Halte-Formation (94) wenigstens eine zweite Positionier/Halte-Einheit (134) umfasst, und dass die Gegen-Positionier/Halte-Formation (103) wenigstens eine mit einer zweiten Positionier/Halte-Einheit (134) in Eingriff stehende oder bringbare zweite Gegen-Positionier/Halte-Einheit (138) umfasst, wobei durch jede mit einer zweiten Positionier/Halte-Einheit (134) in Eingriff stehende zweite Gegen-Positionier/Halte-Einheit (138) der Vorrichtungsträger (14) bezüglich des Oberwagens (78) gegen Bewegung im Wesentlichen in horizontaler Richtung oder/und gegen die Bewegung in vertikaler Richtung nach unten gehalten ist.

7. Transportsystem nach Anspruch 6, **dadurch gekennzeichnet, dass** wenigstens eine, vorzugsweise jede zweite Positionier/Halte-Einheit (134) eine Auflagefläche (132) am Oberwagen (78) umfasst, und dass wenigstens eine, vorzugsweise jede zweite Gegen-Positionier/Halte-Einheit (138) einen auf einer Auflagefläche (132) am Oberwagen (78) aufliegend positionierten oder positionierbaren Auflieger (136) umfasst.

8. Transportsystem nach einem der vorangehenden Ansprüche, **dadurch gekennzeichnet, dass** am Transportwagen (62), vorzugsweise am Unterwagen (64), wenigstens ein Handgriff (88, 90) zum Bewegen des Transportwagens (62) vorgesehen ist, oder/und dass der Oberwagen (78) bezüglich des Unterwagens (64) durch einen Scherenhubmechanismus (82) höhenverstellbar getragen ist, oder/und dass am Transportwagen (62), vorzugsweise am Unterwagen (64), eine Hubmaschinen-Eingriffsformation (76) vorgesehen ist.

9. Transportsystem nach Anspruch 8, **dadurch gekennzeichnet, dass** die Hubmaschinen-Eingriffsformation (76) wenigstens zwei Hubwerkzeug-Eingriffsöffnungen, vorzugsweise zueinander im Wesentlichen parallel sich erstreckende Eingriffsschächte (72, 74), umfasst.

10. Transportsystem nach Anspruch 8 oder 9, **dadurch gekennzeichnet, dass** dem Scherenhubmechanismus (82) ein mit Druckfluid, vorzugsweise hydraulisch, betätigter Stellantrieb (84) zugeordnet ist, oder/und dass am Transportwagen (62), vorzugsweise am Unterwagen (64), eine Anschluss/Betätigungs-Einheit (92) zum Anschluss eines dem Scherenhubmechanismus (82) zugeordneten Stellantriebs (84) an eine Energiequelle und zur Betätigung des Stellantriebs (84) vorgesehen ist.

11. Transportsystem nach einem der vorangehenden Ansprüche, **dadurch gekennzeichnet, dass** an wenigstens einem, vorzugsweise jedem Vorrichtungsträger (14) eine zum lösbaren Festlegen des Vorrichtungsträgers (14) an einer an einer Schweißzelle vorgesehenen ersten Kupplungseinheit (18) mit der ersten Kupplungseinheit (18) in Eingriff bringbare zweite Kupplungseinheit (20) vorgesehen ist.

12. Transportsystem nach Anspruch 11, **dadurch gekennzeichnet, dass** eine Kupplungseinheit von erster Kupplungseinheit (18) und zweiter Kupplungseinheit (20) eine Schiebe-Eingriffsaussparung (24) aufweist und die andere Kupplungseinheit von erster Kupplungseinheit (18) und zweiter Kupplungseinheit (20) einen in einer Schieberichtung (R) in die Schiebe-Eingriffsaussparung (84) einschiebbaren Schiebe-Eingriffskörper (26) aufweist.

13. Transportsystem nach Anspruch 11 oder 12, **dadurch gekennzeichnet, dass** eine zwischen einem Freigabezustand und einem Formschluss-Positionierzustand verstellbare Formschluss-Positionieranordnung (46) vorgesehen ist, wobei bei in die Schiebe-Eingriffsaussparung (24) eingreifend positioniertem Schiebe-Eingriffskörper (26) die Formschluss-Positionieranordnung (46) im Formschluss-Positionierzustand den Schiebe-Eingriffskörper (26) in einer Betriebsstellung bezüglich der Schiebe-Eingriffsaussparung (24) positioniert gegen Verschiebung in der Schiebe-Eingriffsaussparung (24) hält.

14. Transportsystem nach Anspruch 11, 12 oder 13, **dadurch gekennzeichnet, dass** die Schiebe-Eingriffsaussparung (24) eine Hinterschneidung bildet und der in die Schiebe-Eingriffsaussparung (24) eingeschobene Schiebe-Eingriffskörper (26) die Hinterschneidung hintergreift, wobei vorzugsweise die Schiebe-Eingriffsaussparung (24) ein Schwalbenschwanz-Innenprofil (30) aufweist und der Schiebe-Eingriffskörper (26) ein Schwalbenschwanz-Außenprofil (32) aufweist.

## Claims

1. Conveyor system for conveying devices for receiving components to be welded together, in particular for internal combustion engine exhaust systems, into and out of a welding cell, comprising:
- a conveying vehicle (62) with a chassis (64) displaceable on a subfloor by means of rollers (68) and with a superstructure (78) carried vertically adjustably on the chassis (64), and
- at least one device carrier (14) for receiving components to be welded together in a position intended for welding together in relation to one another,
wherein a positioning/holding formation (94) is provided on the superstructure (78), and a counter-positioning/holding formation (103), which meshes with or can be caused to mesh with the positioning/holding formation (94) for presetting a conveying position of the device carrier (14) on the superstructure (78), is provided on the device carrier (14),
**characterized in that** the positioning/holding formation (94) comprises at least one first positioning/holding unit (96, 98) and the counter-positioning/holding formation (103) comprises at least one first counter-positioning/holding unit (104, 106), which meshes with or can be caused to mesh with a first positioning/holding unit (96, 98), wherein the device carrier (14) is held essentially unmovable in relation to the superstructure (78) in each direction in space by each first counter-positioning/holding unit (104, 106) meshing with a first positioning/holding unit (96, 98).

2. Conveyor system in accordance with claim 1, **characterized in that** the positioning/holding formation (94) comprises at least two first positioning/holding units (96, 98) and the counter-positioning/holding formation (103) comprises at least two first counter-positioning/holding units (104, 106), which mesh with or can be caused to mesh with a first positioning/holding unit (96, 98).

3. Conveyor system in accordance with claims 1 or 2, **characterized in that** at least one and preferably each first positioning/holding unit (96, 98) or at least one and preferably each first counter-positioning/holding unit has a positioning/holding mount (100), and that at least one and preferably each first counter-positioning/holding unit (104, 106) or at least one and preferably each first positioning/holding unit (100) comprises a positioning/holding projection (108, 110) that is positioned or can be positioned such that it meshes with a positioning/holding mount (100).

4. Conveyor system in accordance with claim 3, **characterized in that** each first positioning/holding unit (96, 98) or/and first counter-positioning/holding (104, 106) comprises a holding element (112), which prevents the positioning/holding projection (108, 110) from moving out of the positioning/holding mount (100) receiving the projection in association with at least the positioning/holding projection (108, 110) that is positioned or can be positioned such that it meshes with a positioning/holding mount (100).

5. Conveyor system in accordance with claim 4, **characterized in that** at least one and preferably each holding element (112) comprises a holding bolt (114), which is positioned or can be positioned such that it passes through at least one opening (118, 120) of a positioning/holding mount (100) and through an opening (106) of a positioning/holding projection (110), which is positioned or can be positioned such that it meshes with the positioning/holding mount (100), wherein said opening (106) is aligned with said opening (118, 120), or/and that a locking device (122), which secures a holding element (112) against moving out of openings (116, 118, 120), preferably acts in a positive-locking manner and can be activated and deactivated by rotating the holding element (112), is associated with at least one and preferably with each holding element (112).

6. Conveyor system in accordance with one of the preceding claims, **characterized in that** the positioning/holding formation (94) comprises at least one second positioning/holding unit (134), and that the counter-positioning/holding formation (103) comprises at least one second counter-positioning/holding unit (138), which meshes with or can be caused to mesh with a second counter-positioning/holding unit (134), wherein the device carrier (14) is held against movement essentially in the horizontal direction or/and against the movement in the vertical direction downward in relation to the superstructure (78) by every second counter-positioning/holding unit (138) meshing with a second positioning/holding unit (134).

7. Conveyor system in accordance with claim 6, **characterized in that** at least one and preferably every second positioning/holding (134) comprises a support surface (132) on the superstructure (78), and that at least one and preferably every second counter-positioning/holding unit (138) comprises a support (136) that is positioned or can be positioned such that it lies on a support surface (132) on the superstructure (78).

8. Conveyor system in accordance with one of the preceding claims, **characterized in that** at least one handle (88, 90) for moving the conveying vehicle (62) is provided on the conveying vehicle (62), preferably on the chassis (64), or/and that the superstructure (78) is carried vertically adjustably in relation to the chassis (64) by a scissor-type lifting mechanism (82), or/and that a lifting machine meshing formation (76) is provided on the conveying vehicle (62), preferably on the chassis (64).

9. Conveyor system in accordance with claim 8, **characterized in that** the lifting machine meshing formation (76) comprises at least two lifting tool meshing openings, preferably meshing shafts (72, 74) extending essentially parallel to one another.

10. Conveyor system in accordance with claim 8 or 9, **characterized in that** an adjusting drive (84) actuated with pressurized fluid, preferably hydraulically, is associated with the scissor-type lifting mechanism (82), or/and that a connecting/actuating unit (92) is provided on the conveying vehicle (62), preferably on the chassis (64), for connecting an adjusting drive (84) associated with the scissor-type lifting mechanism (82) to a power source and for actuating the adjusting drive (84).

11. Conveyor system in accordance with one of the preceding claims, **characterized in that** a second coupling unit (20), which can be caused to mesh with the first coupling unit (18), is provided at at least one and preferably each device carrier (14) for detachably fixing the device carrier (14) at a first coupling unit (18) provided at a welding cell.

12. Conveyor system in accordance with claim 11, **characterized in that** one coupling unit out of the first coupling unit (18) and second coupling unit (20) has a pushing meshing recess (24) and the other coupling unit of the first coupling unit (18) and second coupling unit (20) has a pushing meshing body (26) that can be pushed into the pushing meshing recess (84) in a direction of pushing (R).

13. Conveyor system in accordance with claim 11 or 12, **characterized in that** a positive-locking positioning device (46) adjustable between a released state and a positive-locking positioning state is provided, wherein the positive-locking positioning device (46) holds the pushing meshing body (26) in an operating position in relation to the pushing meshing recess (24) against displacement in the pushing meshing recess (24) in the positive-locking positioning state when the pushing meshing body (26) is positioned such that it meshes with the pushing meshing recess (24).

14. Conveyor system in accordance with claim 11, 12 or 13, **characterized in that** the pushing meshing recess (24) forms an undercut and the pushing meshing body (26) pushed into the pushing meshing recess (24) extends behind the undercut, wherein preferably the pushing meshing recess (24) has a dovetail inner profile (30) and the pushing meshing body (26) has a dovetail outer profile (32).

## Revendications

1. Système de transport pour le transport de dispositifs de réception de composants à souder ensemble, en particulier pour les systèmes d'échappement des moteurs à combustion interne, dans et hors d'une cellule de soudage, comprenant :
- un véhicule de transport (62) avec un châssis (64) déplaçable sur un sous-sol au moyen de rouleaux (68) et avec une superstructure (78) portée de manière réglable en hauteur sur le châssis (64), et
- au moins un support de dispositif (14) destiné à recevoir des composants à souder ensemble dans une position prévue pour le soudage de ces composants les uns par rapport aux autres,
dans lequel une formation de positionnement / maintien (94) est prévue sur la superstructure (78), et une formation de contre-positionnement / maintien (103), qui s'engrène ou peut être amenée à s'engrener avec la formation de positionnement / maintien (94) pour prérégler une position de transport du support de dispositif (14) sur la superstructure (78), est prévue sur le support de dispositif (14),
**caractérisé en ce que** la formation de positionnement / maintien (94) comprend au moins une première unité de positionnement / maintien (96, 98) et la formation de contre-positionnement / maintien (103) comprend au moins une première unité de contre-positionnement / maintien (104, 106), qui s'engrène ou peut être amené à engrener avec une première unité de positionnement / maintien (96, 98), dans lequel le support de dispositif (14) est maintenu essentiellement immobile par rapport à la superstructure (78) dans chaque direction de l'espace par chaque première unité de contre-positionnement / maintien (104, 106) s'engrenant avec une première unité de positionnement / maintien (96, 98).

2. Système de transport selon la revendication 1, **caractérisé en ce que** la formation de positionnement / maintien (94) comprend au moins deux premières unités de positionnement / maintien (96, 98) et la formation de contre-positionnement / maintien (103) comprend au moins deux premières unités de contre-positionnement / maintien (104, 106), qui s'engrènent ou peuvent être amenées à s'engrener avec une première unité de positionnement / maintien (96, 98).

3. Système de transport selon les revendications 1 ou 2, **caractérisé en ce qu'**au moins une et de préférence chaque première unité de positionnement / maintien (96, 98) ou au moins une et de préférence chaque première unité de contre-positionnement / maintien présente un support de positionnement / maintien (100), et **en ce qu'**au moins une et de préférence chaque première unité de contre-positionnement / maintien (104, 106) ou au moins une et de préférence chaque première unité de positionnement / maintien (100) comprend une projection de positionnement / maintien (108, 110) qui est positionnée ou peut être positionnée de telle sorte qu'elle s'engrène avec un support de positionnement / maintien (100).

4. Système de transport selon la revendication 3, **caractérisé en ce que** chaque première unité de positionnement / maintien (96, 98) et/ou premier contre-positionnement / maintien (104, 106) comprend un élément de maintien (112), qui empêche la projection de positionnement / maintien (108, 110) de sortir du support de positionnement / maintien (100) recevant la projection en association avec au moins la projection de positionnement / maintien (108, 110) qui est positionnée ou peut être positionnée de telle sorte qu'elle s'engrène avec un support de positionnement / maintien (100).

5. Système de transport selon la revendication 4, **caractérisé en ce qu'**au moins un et de préférence chaque élément de maintien (112) comprend un boulon de maintien (114), qui est positionné ou peut être positionné de telle sorte qu'il passe à travers au moins une ouverture (118, 120) d'un support de positionnement / maintien (100) et à travers une ouverture (106) d'une projection de positionnement / maintien (110), qui est positionnée ou peut être positionnée de telle sorte qu'elle s'engrène avec le support de positionnement / maintien (100), dans lequel l'ouverture (106) est alignée avec l'ouverture (118, 120), et/ou qu'un dispositif de verrouillage (122), qui empêche un élément de retenue (112) de sortir des ouvertures (116, 118, 120), agit de préférence par complémentarité de formes et peut être activé et désactivé par rotation de l'élément de retenue (112), est associé à au moins un et de préférence à chaque élément de retenue (112).

6. Système de transport selon l'une des revendications précédentes, **caractérisé en ce que** la formation de positionnement / maintien (94) comprend au moins une deuxième unité de positionnement / maintien (134), et que la formation de contre-positionnement / maintien (103) comprend au moins une deuxième unité de contre-positionnement / maintien (138), qui s'engrène ou peut être amené à s'engrener avec une deuxième unité de contre-positionnement/maintien (134), dans lequel le support de dispositif (14) est maintenu contre un mouvement essentiellement dans la direction horizontale et/ou contre le mouvement dans la direction verticale vers le bas par rapport à la superstructure (78) par chaque deuxième unité de contre-positionnement/maintien (138) s'engrenant avec une deuxième unité de positionnement /maintien (134).

7. Système de transport selon la revendication 6, **caractérisé en ce qu'**au moins une unité de positionnement / maintien (134), et de préférence une unité de positionnement / maintien sur deux, comporte une surface d'appui (132) sur la superstructure (78), et **en ce qu'**au moins une unité de contre-positionnement / maintien (138), et de préférence une unité de contre-positionnement / maintien sur deux, comporte un support (136) qui est positionné ou peut être positionné de telle sorte qu'il repose sur une surface d'appui (132) sur la superstructure (78).

8. Système de transport selon l'une des revendications précédentes, **caractérisé en ce qu'**au moins une poignée (88, 90) pour le déplacement du véhicule de transport (62) est prévue sur le véhicule de transport (62), de préférence sur le châssis (64), ou/et que la superstructure (78) est portée de manière réglable en hauteur par rapport au châssis (64) par un mécanisme de levage à ciseaux (82), ou/et qu'une formation d'engrènement (76) de la machine de levage est prévue sur le véhicule de transport (62), de préférence sur le châssis (64).

9. Système de transport selon la revendication 8, **caractérisé en ce que** la formation d'engrènement de la machine de levage (76) comprend au moins deux ouvertures d'engrènement des outils de levage, de préférence des arbres d'engrènement (72, 74) s'étendant essentiellement parallèlement l'un à l'autre.

10. Système de transport selon la revendication 8 ou 9, **caractérisé en ce qu'**un entraînement de réglage (84) actionné par un fluide sous pression, de préférence hydrauliquement, est associé au mécanisme de levage à ciseaux (82), et/ou **en ce qu'**une unité de liaison/actionnement (92) est prévue sur le véhicule de transport (62), de préférence sur le châssis (64), pour relier un entraînement de réglage (84) associé au mécanisme de levage à ciseaux (82) à une source de courant et pour actionner l'entraînement de réglage (84).

11. Système de transport selon l'une des revendications précédentes, **caractérisé en ce qu'**une deuxième unité d'accouplement (20), qui peut être mise en prise avec la première unité d'accouplement (18), est prévue sur au moins un et de préférence sur chaque support de dispositif (14) pour fixer de manière amovible le support de dispositif (14) sur une première unité d'accouplement (18) prévue sur une cellule de soudage.

12. Système de transport selon la revendication 11, **caractérisé en ce qu'**une unité d'accouplement parmi la première unité d'accouplement (18) et la deuxième unité d'accouplement (20) présente un évidement d'engrènement de poussée (24) et l'autre unité d'accouplement parmi la première unité d'accouplement (18) et la deuxième unité d'accouplement (20) présente un corps d'engrènement de poussée (26) qui peut être poussé dans l'évidement d'engrènement de poussée (84) dans une direction de poussée (R).

13. Système de transport selon la revendication 11 ou 12, **caractérisé en ce qu'**il est prévu un dispositif de positionnement à engagement positif (46) réglable entre un état de libération et un état de positionnement à engagement positif, le dispositif de positionnement à engagement positif (46) maintenant le corps d'engrènement de poussée (26) dans une position de fonctionnement par rapport à l'évidement d'engrènement de poussée (24) contre un déplacement dans l'évidement d'engrènement de poussée (24) dans l'état de positionnement à engagement positif lorsque le corps d'engrènement de poussée (26) est positionné de telle sorte qu'il s'engrène avec l'évidement d'engrènement de poussée (24).

14. Système de transport selon la revendication 11, 12 ou 13, **caractérisé en ce que** l'évidement d'engrènement de poussée (24) forme une contre-dépouille et le corps d'engrènement par poussée (26) poussé dans l'évidement d'engrènement de poussée (24) s'étend derrière la contre-dépouille, de préférence l'évidement d'engrènement de poussée (24) présentant un profil intérieur en queue d'aronde (30) et le corps d'engrènement de poussée (26) présentant un profil extérieur en queue d'aronde (32).
